(19) 

Europäisches Patentamt

European Patent Office

Office européen des brevets

(11) **EP 4 627 131 B1**

(12) **EUROPEAN PATENT SPECIFICATION**

(45) Date of publication and mention of the grant of the patent:
**13.05.2026 Bulletin 2026/20**

(21) Application number: **24701336.0**

(22) Date of filing: **17.01.2024**

(51) International Patent Classification (IPC):
*C22C 38/04* (2006.01)   *C22C 38/12* (2006.01)
*C22C 38/14* (2006.01)   *C22C 38/06* (2006.01)
*C22C 38/02* (2006.01)   *C21D 9/46* (2006.01)
*C21D 8/02* (2026.01)   *C21D 6/00* (2006.01)
*C21D 6/02* (2006.01)   *C21D 1/26* (2006.01)
*C23C 2/06* (2006.01)   *C23C 2/02* (2006.01)
*C23C 2/26* (2006.01)   *B32B 15/01* (2006.01)

(52) Cooperative Patent Classification (CPC):
**C22C 38/04; B32B 15/013; C21D 1/26;**
**C21D 6/005; C21D 6/02; C21D 8/02; C21D 8/021;**
**C21D 8/0226; C21D 8/0236; C21D 8/0247;**
**C21D 8/0278; C21D 9/46; C22C 38/02;**
**C22C 38/06; C22C 38/12;**                    (Cont.)

(86) International application number:
**PCT/EP2024/051046**

(87) International publication number:
**WO 2024/153701 (25.07.2024 Gazette 2024/30)**

(54) **COLD ROLLED STEEL AND PRODUCTION PROCESS THEREOF**

KALTGEWALZTER STAHL UND HERSTELLUNGSVERFAHREN DAFÜR

ACIER LAMINÉ À FROID ET SON PROCÉDÉ DE PRODUCTION

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **18.01.2023 EP 23152236**

(43) Date of publication of application:
**08.10.2025 Bulletin 2025/41**

(73) Proprietor: **voestalpine Stahl GmbH**
**4020 Linz (AT)**

(72) Inventors:
• **PLOBERGER, Mario**
  **4020 LINZ (AT)**
• **HEBESBERGER, Thomas**
  **4061 PASCHING (AT)**

(74) Representative: **Noréns Patentbyrå AB**
**Box 10198**
**100 55 Stockholm (SE)**

(56) References cited:
EP-A1- 3 926 064     CN-A- 107 460 404
CN-A- 109 207 842     CN-A- 112 680 655
CN-A- 115 404 408

(52) Cooperative Patent Classification (CPC): (Cont.)
**C22C 38/14; C23C 2/02; C23C 2/06; C23C 2/26**

**Description**

TECHNICAL FIELD

The present invention relates to a cold rolled strip or sheet having a high strength combined with good local formability. The invention also relates to a continuous annealing process for producing the strip or sheet.

BACKGROUND

The development of materials that combines high strength and formability has contributed to the reduction of the weight of components in automotive applications. The development involves improving formability without reducing the strength of cold-rolled steel sheets for general purposes and increasing the strength while maintaining the formability of various high strength steel sheets.

For some component a good local formability is particularly desirable, such as hole expansion ratio and bending. An example of a component that requires high yield strength and good bendability is a seat rail. For other components, hole expansion may be of greater importance. Cost is also an important factor.

Typically seat have been formed from high strength micro alloyed steel strips that are produced in a production line using reversible cold rolling mills and batch annealing of the cold rolled strips. The dimensions of such steel strips are smaller than those in continuous cold rolling mill and a continuous annealing line. The strips are typically uncoated.

For wider strips, batch annealing is also a common annealing process, but generally for steel grades with lower strength classes. For higher strength classes, continuous annealing lines are usually employed.

WO 2022/1845780 A1 disclose a cold rolled steel product having a ferritic microstructure. The steel is alloyed with at least one element from the group Ti, Nb, V and at least one element from the group Cr, Mo, W. The use of expensive alloying elements can lead to higher cost of the product. It is cold worked to a reduction degree of 5 - 70 % and continuously annealed at a temperature in the range of 700 - 900 °C.

CN112680655A disclose a cold rolled steel product having a yield strength ($R_{p0.2}$) of 700 - 850 MPa. The steel is micro alloyed with Ti and Nb. The amount of Mn is 1.0 - 1.5 %, preferably 1.2 - 1.4 %. It is cold worked to a reduction degree of 60-70 % and continuously annealed at a temperature in the range of 770 - 800 °C. After the annealing, the product is slowly cooled to a temperature of 630 - 670 °C, followed by rapidly cooling to 400 - 450 °C where it is overaged. The microstructure comprises austenite.

EP1399598 B2 disclose a cold rolled steel product. The steel is alloyed with at least one element from the group Ti, Nb, V. It is cold worked to a reduction degree of 5 - 20 %, particularly 5 - 10% and annealed at a temperature in the range of 450 -700 °C, preferably 550 - 650 °C. All examples are high in Mn and Cr.

CN109207842A disclose a cold rolled steel product. The steel is micro alloyed with Ti and Nb. The amount of Mn is 1.1 - 1.5 %, preferably 1.2 -1.5% to ensure the strength of the steel. It is cold worked to a reduction degree of 40 - 60 %, preferably 45 - 50 %.

It would be advantageous to provide an improved wide steel strip and a process for producing a wide steel strip that can be used for components requiring high yield strength and good local formability, such as hole expansion ratio and bendability. The steel strip should preferably be able to be produced in continuous annealing line, at low cost and high volumes. Furthermore, process stability is a desirable outcome to minimise losses due to discarding products not meeting the requirements. It should preferably be easy to weld.

DETAILED DESCRIPTION

The invention is described in the claims.

In a preferred embodiment the cold rolled steel strip or sheet has a composition consisting of the following alloying elements (in wt. %):

| | |
|---|---|
| C | 0.02 - 0.10 |
| Si | 0.05 - 0.5 |
| Mn | 0.6 - 1.0 |
| Al | 0.015 - 1.5 |
| Ti | 0.03 - 0.12 |
| Nb | 0.01 - 0.06 |
| Ti+ Nb | 0.05 - 0.15 |

the balance consists of iron and impurities, and
wherein the impurity elements are limited to

| | |
|---|---|
| V | ≤ 0.10 |
| Cr | ≤ 0.10 |
| Mo | ≤ 0.05 |
| W | ≤ 0.05 |
| Ni | ≤ 0.20 |
| Cu | ≤ 0.20 |
| Sn | ≤ 0.015 |
| Zr | ≤ 0.010 |
| As | ≤ 0.010 |
| B | ≤ 0.001 |
| Ca | ≤ 0.05 |
| P | ≤ 0.02 |
| S | ≤ 0.005 |
| N | ≤ 0.05 |
| O | ≤ 0.0003 |
| H | ≤ 0.0020 |

The importance of the separate elements and their interaction with each other as well as the limitations of the chemical composition of the claimed alloy are briefly explained in the following. All percentages for the chemical composition of the steel are given in weight % (wt. %) throughout the description. The microstructural constituents are expressed in volume % (vol. %) throughout the description. Upper and lower limits of the individual elements can be freely combined within the limits set out in the claims. The arithmetic precision of the numerical values can be increased by one or two digits for all values given in the present application. Hence, a value of given as e.g. 0.1 % can also be expressed as 0.10 or 0.100 %.

C: 0.02 - 0.10 %

C is important for obtaining the desired strength level. When C is lower than 0.02 % it is difficult to attain a tensile strength of 830 MPa. If the C content is too high, non-desired high amount of phases such as perlite, and/or cementite can be formed. These phases can impair the ductility of the present steel and particularly local formability. The upper limit is therefore set to 0.10 %. The upper limit may further be restricted to 0.09, 0.08, or 0.07%. The lower limit may further be restricted to 0.03, or 0.04 %. A preferred range is 0.03 - 0.07 %.

Si: 0.05 - 0.5 %

Si is a ferrite forming element that is solid solution strengthening and can be used for deoxidation of the molten steel. Addition of Si may also supress the precipitation of perlite and cementite. Too high content of Si may impair the surface quality of the steel sheet and can negatively affect the coating properties. Welding can also be impaired when Si is too high due to liquid metal embrittlement (LME) caused by excess Si addition. The lower limit is 0.05, and may be 0.10, 0.15, 0.20, or 0.25 %. The upper limit is 0.5, and may be 0.45, 0.40, or 0.35 %. A preferred range is 0.20 -0.40 %.

Mn: 0.6 - 1.0 %

Manganese is a solid solution strengthening element in ferrite. Mn lowers the Ac3 temperature. Too much Mn can stabilise the austenite and prevents ferrite and perlite to be formed from austenite during cooling. Mn is also an expensive element, and it is therefore limited. The upper limit is 1.0, and may be 0.99, 0.98, 0.97, 0.96 or 0.95 %. The lower limit is 0.6, and may be 0.7, or 0.8 %. A preferred range is 0.7 - 1.0 %, more preferred 0.8 -1.0 %.

Al: 0.015 - 1.5 %

Al is an alloying element that increases the Ac3 temperature, promotes ferrite formation and can facilitate precipitation hardening. The steel does not require a deliberate addition of Al as an alloying element. However, Al is commonly used as a deoxidizer of the molten steel and will therefore be present in smaller amounts even if not deliberately added as an alloying element. Therefore, the lower limit is set to 0.015 %. The upper limit may be restricted to 1.0, 0.9, 0.8, 0.7, 0.6, 0.5, 0.4, 0.3, 0.2 or 0.1 %.

Ti: 0.03 - 0.12 %

The steel is micro alloyed with Titanium. Ti is a strong N and deoxidizing agent and TiN is formed in the slab at high temperatures. TiC and Ti(C, N) precipitates at lower temperatures improving strength and toughness, because of the precipitation hardening effect and its influence on a reduced grain size. Another property of Ti is the retardation or inhibition of recrystallization. This can be used by dissolved elements as well as carbides and carbonitride precipitations. The beneficial effect of Ti tends to be saturated above 0.12 %. The lower limit **is 0.03,** and may be 0.04, 0.05, 0.06, 0.07, or 0.08 %. The upper limit is 0.12, and may be 0.11 or 0.10 %. A preferred range is 0.07 - 0.11 %.

Nb: 0.01 - 0.06 %

The steel is micro alloyed with Nb. Nb is used for improving strength and toughness, because of its influence on the grain size. Nb increases the strength of the steel due to precipitation of NbC and/or Nb(C, N) in the ferrite matrix and reduces the size of the ferrite grains. Another property of Nb is the retardation or inhibition of recrystallization. This can be used by dissolved elements as well as carbonitride precipitations. The lower limit is 0.01, and may be 0.02 %. The upper limit is 0.06 and may be 0.05%. A preferred range is 0.02 - 0.05 %.

Ti + Nb: 0.05 - 0.15 %

To ensure sufficient strength of the steel the combined content of Ti+Nb should be at least 0.05 %. The lower limit is 0.05, and may be 0.06, 0.07, 0.08, 0.09 or 0.10 %. The upper limit is 0.15, and may be 0.14 or 0.13%. A preferred range is 0.08 -0.14 %.

V: $\leq 0.10\%$

The function of V is similar to that of Nb in that it contributes to precipitation hardening and grain refinement. Another property of V is the retardation or inhibition of recrystallization. This can be used by dissolved elements as well as carbonitride precipitations. The steel may contain V in an amount of $\leq 0.10$ %. A deliberate addition of V is not necessary according to the present invention. The upper limit is restricted to 0.10, and may be restricted to 0.05, 0.03, or 0.01 %. A lower limit may be 0.001%.

Cr: $\leq 0.10$ %

Cr is not needed for this steel. Cr is effective in increasing the strength of the steel sheet. Cr is an element that forms ferrite and retards the formation of pearlite and bainite. However, Cr is an expensive element, and it is therefore not deliberately added. Cr may however be present as an impurity, e.g. from scarp handling. The upper limit is restricted to 0.10, and may be restricted to 0.09, 0.08, 0.07, 0.06 or 0.05 %. The lower limit may be 0.005 % and may further be raised to 0.01%.

Mo $\leq 0.05\%$

Mo is a strengthening element. However, Mo is an expensive element. A deliberate addition of Mo is therefore not desired according to the present invention. The upper limit is therefore restricted to 0.05, and may be restricted to 0.04, 0.03, 0.02, or 0.01 %. Mo may be present as an impurity, e.g. from scarp handling. A lower limit may therefore be 0.0005 % and may further be raised to 0.001%.

W $\leq 0.05\%$

W is a strengthening element. However, W is an expensive element. W can also make scrap handling more complicated. A deliberate addition of W is therefore not desired according to the present invention. The upper limit is therefore restricted to 0.05, and may be restricted to 0.04, 0.03, 0.02, or 0.01 %.

Ni: $\leq 0.20$ %

Ni is an undesired impurity element that is restricted to $\leq 0.20$ % by careful selection of the scrap used. The upper limit may further be restricted to 0.10, or 0.05%.

Cu: $\leq 0.20$ %

Cu is an undesired impurity element that is restricted to $\leq 0.20$ % by careful selection of the scrap used. The upper limit may further be restricted to 0.10, or 0.05%.

Sn $\leq 0.015$ %

Sn is an undesired impurity element that is restricted to $\leq 0.015$ % by careful selection of the scrap used. The upper limit may further be restricted to 0.010, or 0.005%.

Zr $\leq 0.010$ %

Zr is an undesired impurity element that is restricted to $\leq 0.010$ % by careful selection of the scrap used. The upper limit may further be restricted to 0.05%.

As $\leq 0.010$ %

As is an undesired impurity element that is restricted to $\leq 0.010$ % by careful selection of the scrap used. The upper limit may further be restricted to 0.05%.

B: $\leq 0.001$%

B is an undesired impurity element that is restricted to $\leq 0.001$% by careful selection of the scrap used. B above this level affect bendability negatively. An addition of B makes scrap recycling more difficult and may also deteriorate workability.

Ca $\leq 0.05$

Ca may be used for the modification of the non-metallic inclusions. The upper limit is 0.05% and may be set to 0.04, 0.03, 0.01 %. A deliberate addition of Ca is not necessary according to the present invention. The upper limit may therefore be restricted to $\leq 0.005$%.

Other impurity elements may be comprised in the steel in normal occurring amounts.

It is also preferred to control the nitrogen content such that N: $\leq 0.05$ %, preferably $\leq 0.01$ %. A preferred range is 0.001 - 0.008 %. In this range a stable fixation of the nitrogen can be achieved.

Oxygen and hydrogen is limited to

O: $\leq 0.0003$
H: $\leq 0.0020$

Phosphorus and Sulphur is limited to

P: $\leq 0.02$
S: $\leq 0.005$

The Carbon equivalent is expressed as $C_{Eq} = C + Mn/6 + (Cu + Ni)/15 + (Cr + Mo + V)/5$. Generally, it has been assessed that a carbon equivalent $C_{Eq}$ of up to 0.45 % leads to good weldability, otherwise there is a heat treatment necessary, to protect the steel from martensitic induced cracks. However, an even lower $C_{Eq}$ can improve weldability further. A preferred upper limit of $C_{Eq}$ is therefore set to 0.28. This also reduces costs since these alloying elements are expensive.

The steel is preferably recovery annealed with less than 20 volume percent recrystallized grains. The microstructure is ferritic and consisting of $\geq 95$ % ferrite and < 5 % of perlite, cementite, carbides, nitrides, and/or carbonitrides. The microstructure is free of other phases such as austenite, martensite, or bainite.

The ratios of the microstructure can be obtained by cutting out a sample from a steel plate and polishing a cross section of a plate parallel to the rolling direction. The sample can be grinded to ¼ of the thickness of the plate for the measurements. The surface can be etched to make the phases easier to identify. A scanning electron microscope (SEM) using 2000 times magnification can be used to study the etched surface and determine the amount of the phases.

The mechanical properties of the claimed steel are important and the following requirements are fulfilled:

| | |
|---|---|
| Yield strength ($R_{p0.2}$) | 800 - 950 MPa |
| Tensile strength ($R_m$) | 830 - 1000 MPa |
| Total elongation ($A_{80}$) | ≥ 9%, preferably > 10 % |
| Hole expansion ratio ($\lambda$) | ≥ 60 % |

The following mechanical property also is fulfilled:

| | |
|---|---|
| Bendability (Ri/t) | ≤ 1.0 |

The $R_m$, $R_{p0.2}$ values as well as the total elongation ($A_{80}$) are derived in accordance with the Industrial Standard DIN EN ISO 6892-1, wherein the samples are taken in the longitudinal direction of the strip.

The hole expansion ratio ($\lambda$) is determined by the hole expansion test according to ISO/WD 16630:2009 (E). In this test a conical punch having an apex of 60 ° is forced into a 10 mm diameter punched hole made in a steel sheet having the size of 100 x 100 mm. The test is stopped as soon as the first crack is determined, and the hole diameter is measured in two directions orthogonal to each other. The arithmetic mean value is used for the calculation.

The hole expansion ratio ($\lambda$) in % is calculated as follows:

$$\lambda = (Dh - Do)/Do \times 100$$

wherein Do is the diameter of the hole at the beginning (10 mm) and Dh is the diameter of the hole after the test.

The bendability is evaluated by the ratio of the limiting bending radius (Ri), which is defined as the minimum bending radius with no occurrence of cracks, and the sheet thickness, (t). For this purpose, a 90° V-shaped block is used to bend the steel sheet in accordance with JIS Z2248. The value obtained by dividing the limit bending radius with the thickness (Ri/t) should be less or equal to 1.0.

The strip thickness may be 0.1 - 4 mm, preferably 0.2 - 3 mm. The strip width may be 500 - 2000 mm, preferably 700 - 1750 mm in non-slit condition.

The suggested steel strip can be produced by a method comprising the steps:

a) making steel slabs with the composition suggested above. The steel slabs may e.g. be produced by converter melting or in an electric steel plant and secondary metallurgy to finalise the composition.

b) reheating the slab to a temperature between 1200 °C and 1300 °C for a time in the range of 10 - 300 minutes. The time and temperature are set to enable full dissolution of carbides, and carbonitrides.

c) hot rolling the reheated slab completely in the austenitic range wherein the hot rolling finishing temperature is within the range 850 - 950 °C to obtain a hot rolled steel strip. The hot rolling finishing temperature should be sufficiently high to keep the microalloying elements Nb and Ti in solution

d) cooling the hot rolled strips to a coiling temperature. The cooling rate is typically around 5-100°C/s.

e) Thereafter the hot rolled strip is coiled at a coiling temperature in the range of 470 - 670 °C. The coiling temperature can be modified to either keep the microalloying elements Nb and Ti in solution or to facilitate precipitation hardening using Nb and Ti as a forming element for the hardening precipitates. The coiling temperature may be lower than 570°C to keep Nb, Ti in solution and/or as very fine precipitates. For precipitation hardening effect, the coiling temperature may be higher than 570°C. Carbides and carbonitrides are formed during coiling after hot rolling or during final annealing and retards the recrystallization at the final annealing step.

f) Optionally subjecting the coiled strip to a scale removal process, such as pickling. Preferably the pickling acid being $H_2SO_4$ or HCl.

g) Thereafter, cold rolling the steel strip with a reduction degree in the range of 20 - 40 %. The low reduction degree is to supress recrystallization of the whole microstructure at the final annealing in step h). A preferred reduction degree is 25 - 35 %. The upper limit of the reduction degree may be set to 40, 39, 38, 37, 36, or 35 %.

h) Final continuous annealing of the cold rolled strip at a temperature in the range of 700 - 800 °C for a time in the range of 25 - 175 s. The final continuous annealing is a recovery annealing set for removal and/or rearrangement of defects in their crystal structure from the cold rolling, and for precipitation hardening using Nb and Ti as a forming element for the hardening precipitates The degree of recrystallization is very low due to the low temperature and duration. The final annealing can be done in a Continuously Annealing Line (CAL), in a Hot Dip Galvanizing Line (HDGL), or Continuous Electroplating Line (CEL).

i) cooling the final annealed strip at a cooling rate of 2 - 100 °C/s to an overaging temperature between 200 - 500 °C. Higher cooling rates minimise the diffusion of C to the grain boundaries and the formation of grain boundary cementite. The lower limit may further be restricted to 5, 7.5, 10 or 15 °C/s. The upper limit may further be restricted to 90, 80, 70, 60 or 50 °C/s. The cooling step may include an initial slow gas jet cooling at a rate in the range of 2 - 20 °C/s followed by a rapid jet cooling at a rate in the range of 10 - 100 °C/s. preferably 20 - 80 °C/s.

j) Optionally overaging the final annealed strip at 200 - 500 °C for a duration of 10 - 1000 s.

k) Optionally skin pass rolling of the strip at a rolling elongation of 0 - 2 %. The purpose of the skin pass rolling is to impart the desired surface finish and degree of flatness to the strip.

l) Optionally coating the strip with a zinc-based coating, preferably in a continuous galvanizing process.

m) Optionally cutting the strip to sheets.

EXAMPLE 1

Steel slabs were produced by conventional metallurgy by converter melting and secondary metallurgy. The steel had the following element composition in weight apart from the balance Fe and impurities.

| | |
|---|---|
| C | 0.05 |
| Mn | 0.90 |
| Al | 0.06 |
| Ti | 0.09 |
| Nb | 0.037 |
| Si | 0.30 |

Further elements were less than 0.2 weight % in total and of which Cr was 0.03, Mo 0.005, and W <0.001. None of the impurities were above the levels specified in the claims.

The slabs were reheated to 1245 °C for 25 minutes and thereafter hot rolled into strips. The hot rolling finishing temperature was 930 °C. The hot rolled strips were coiled at a coiling temperature of 540 °C. The hot rolled strips were pickled in HCl. The strips were thereafter cold rolled in a five stand cold rolling mill at reduction degree of 35%.

The cold rolled strips were then final annealed in a continuous annealing line (CAL). The final annealing cycle comprised of heating to a final annealing temperature of 760 °C for 130 s. The final annealed strips were rapidly cooled at a cooling rate of 15 °C/s to an overaging temperature of 400 °C. The strips were thereafter subjected to skin pass rolling at a rolling elongation of 0.4 %.

The mechanical properties were determined according to the standards presented above under the heading mechanical properties. The results are shown in Table 1 together with the target values for each of the mechanical parameters. As can be seen in the table - all target values were reached.

Table 1

| Mechanical Parameter | Measured | Target value | Target reached |
|---|---|---|---|
| Yield strength ($R_{p0.2}$) | 874 MPa | 800 - 950 MPa | Y |
| Tensile strength ($R_m$) | 890 MPa | 830 - 1000 MPa | Y |
| Total elongation ($A_{80}$) | 11.3 | $\geq$ 9%, | Y |
| Hole expansion ratio ($\lambda$) | 70% | $\geq$ 60 % | Y |
| Bendability (Ri/t) | 0.63 | $\leq$ 1.0 | Y |

The microstructure examined in a scanning electron microscope (SEM) at 2000 times magnification. The microstructure was determined to be $\geq$ 95 % ferrite and < 5 % of perlite, cementite, carbides, nitrides, and/or carbonitrides.

EXAMPLE 2

Steel having the same composition as in Example 1 was tested at different cold rolling degrees and different final annealing temperatures.

Slabs of the composition of example 1 were reheated to 1245 °C for 25 minutes and thereafter hot rolled into strips. The hot rolling finishing temperature was 930 °C. The hot rolled strips were coiled at a coiling temperature of 540 °C. The hot rolled strips were pickled in HCl. Strips were thereafter cold rolled in a five stand cold rolling mill at cold reduction degree of 25%, 50% and 75%, respectively.

The cold rolled strips were then final annealed in a continuous annealing line (CAL). The final annealing cycle comprised of heating to final annealing temperatures between 700 - 800 °C for 110 s. The final annealed strips were rapidly cooled at a cooling rate of 20 °C/s to an overaging temperature of 400°C. The strips were thereafter subjected to skin pass rolling at a rolling elongation of 0.3 %.

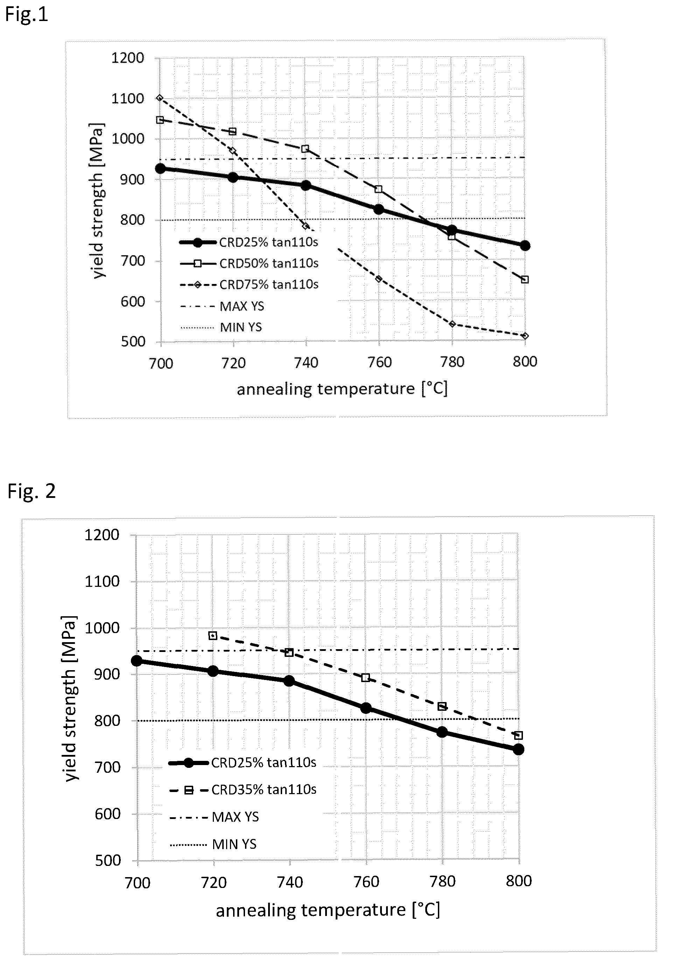

Fig. 1 shows the result of the test. In the Figure, it can be seen that yield strength of the strip subjected to a cold reduction degree of 75% moves very quick through the desired yield strength region 800 - 950 MPa. The yield strength at final annealing temp 720 °C is slightly above the target range and the yield strength at 740 °C is slightly below. Furthermore, the difference $\Delta R_{p0.2}$ between the yield strength at the final annealing temp 700 °C respectively 800 °C is as large as 600 MPa. These factors make the outcome sensitive to process variations.

The yield strength of the strip subjected to a cold reduction degree of 50% is less sensitive to process variations. Here, the yield strength at final annealing temp 740 °C is slightly above the target range and the yield strength at 780 °C is slightly below. I.e. the temperature range that can meet the target range has doubled compared to the 75% cold reduction degree. The difference $\Delta R_{p0.2}$ between the yield strength at the final annealing temp 700 °C respectively 800 °C has decreased to 400 MPa. These factors make the outcome of the 50% cold reduction degree less sensitive to process variations than the 75% cold reduction degree. This was still not considered to be sufficient.

The yield strength of the strip subjected to a cold reduction degree of 25% has the least sensitivity to process variations. Here, the yield strength at final annealing temp 700 °C is within the target range and the yield strength at 780 °C is slightly below. I.e. the temperature range that can meet the target range has doubled compared to the 50% cold reduction degree. The difference $\Delta R_{p0.2}$ between the yield strength at the final annealing temp 700 °C respectively 800 °C has decreased to 200 MPa. These factors make the outcome of the 25% cold reduction degree least sensitive to process variations of the compared cold reduction degrees.

Table 2

| cold reduction degree | $\Delta R_{p0.2}$ |
|---|---|
| 25 % | 200 MPa |
| 50 % | 400 MPa |
| 75 % | 600 MPa |

EXAMPLE 3

The 25 % cold reduction degree steel of Example 2 was compared to a 35% cold reduction degree steel. The other processing conditions were the same as in Example 2, with the exception that there were no samples of the 35% cold reduction degree steel final annealed at 700 °C.

The result of the comparison between 25% and 35% cold reduction degree can be seen in Fig. 2. As can be seen, the processing window is largest for the 25% cold reduction degree with a temperature range of around 70 °C within the target yield strength range 800 - 950 MPa. The 35% cold reduction degree has a narrower processing window of around 50 °C within the target yield strength. Both reduction degrees were considered to provide sufficient process stability of the final annealing.

EXAMPLE 4

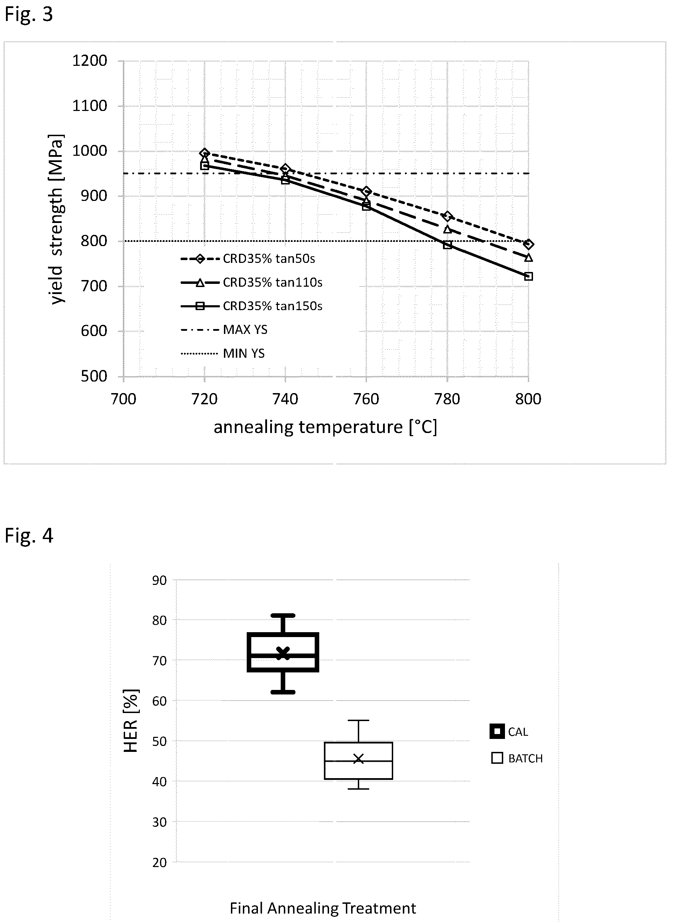

The 35 % cold reduction degree steel of Example 3 was compared to two 35 % cold reduction degree steels final annealed at 50s respectively 150s. The other processing conditions were the same as in Example 2. With the exception that there were no samples final annealed at 700 °C. The results are shown in Fig. 3.

Fig. 3 tells how the final annealing time can be used to affect the yield strength at a given cold reduction degree at different final annealing temperatures. If the yield strength is beneath the target yield strength, the final annealing time can be shortened. This can be seen in the data points of 800 °C, where the final annealing time of 50 s comes within the target yield strength range, whereas 110s and 150s are below the range. Similarly, if the yield strength comes to high the final annealing time can be lengthened. This can be seen in the data points of 740 °C, where the final annealing time of 50 s are outside the target yield strength range, whereas 110s and 150s comes within the range.

EP 4 627 131 B1

EXAMPLE 5

This example was made to evaluate the effect on Hole Expansion Ratio (HER) due to different cooling rates in a continuous annealing and a batch annealing furnace. Steel strips were produced as in example 1 up to the final annealing stage.

The strips were divided into two groups (1) and (2). One for continuous annealing and one for batch annealing.

The first group (1) were final annealed in a continuous annealing line (CAL). The final annealing cycle comprised of heating to a final annealing temperature of 740 - 770 °C for 90 - 150 s. The final annealed strips were rapidly cooled at a cooling rate of 15 - 25 °C/s to an overaging temperature of 400 °C. The strips were thereafter subjected to skin pass rolling at a rolling elongation of 0.3 %.

The second group (2) were final annealed in a coiled state in a batch annealing furnace. The annealing cycle comprised of heating to a final annealing temperature of 600 - 630°C for 2 - 15h. The final annealed strips were slowly cooled at a cooling rate of 30 °C/h to room temperature. The strips were thereafter subjected to skin pass rolling at a rolling elongation of 0.3 %.

The results are shown in Fig. 4. Group (1) that was continuously annealed and rapidly cooled had an HER ranging from 62 - 81 and an average of 72. Group (2) that was batch annealed and slowly cooled, had an HER ranging from 38 - 55 and an average of 46. Hence, it can be seen that the continuously annealed strips have a significantly higher HER than the Batch annealed strips.

EXAMPLE 6

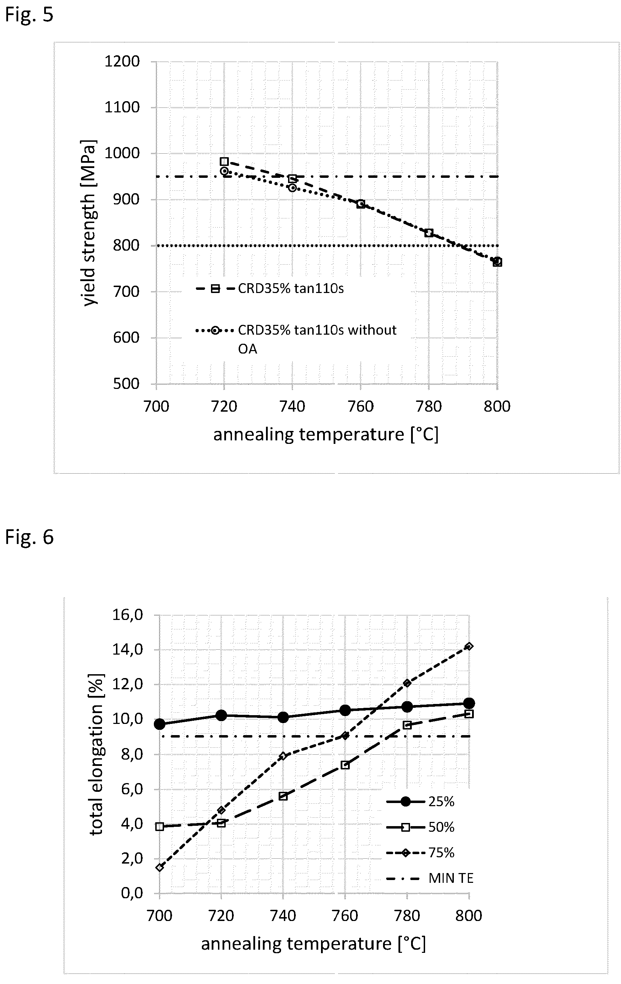

The 35 % cold reduction degree steel of Example 3 was also investigated with and without an overaging treatment. The results are shown in Fig 5.

The comparison shows the yield strength at different annealing temperatures, but with a holding time (tan) of 110s. For this alloy, the whole/full precipitation hardening effect occurs during the annealing treatment above 700°C. The interstitial elements (C, N) are precipitated in the form of stable carbides, nitrides, and/or carbonitrides or forms perlite or cementite during cooling. For that reason, the overaging treatment at temperatures below 500°C no longer has any beneficial or negative strength-increasing effects. The overaging step can therefore be carried out optionally.

EXAMPLE 7

This example was made to evaluate the effect on total elongation due to different annealing temperatures and cold reduction degrees in a continuous annealing line.

Steel having the same composition as in Example 1 was tested at different cold rolling degrees and different final annealing temperatures.

Slabs of the composition of example 1 were reheated to 1245 °C for 25 minutes and thereafter hot rolled into strips. The hot rolling finishing temperature was 930 °C. The hot rolled strips were coiled at a coiling temperature of 540 °C. The hot rolled strips were pickled in HCl. Strips were thereafter cold rolled in a five stand cold rolling mill at cold reduction degree of 25%, 50% and 75%, respectively.

The cold rolled strips were then final annealed in a continuous annealing line (CAL). The final annealing cycle comprised of heating to final annealing temperatures between 700 - 800 °C for 110 s. The final annealed strips were rapidly cooled at a cooling rate of 20 °C/s to an overaging temperature of 400°C. The strips were thereafter subjected to skin pass rolling at a rolling elongation of 0.3 %.

As shown in fig. 6 only the sample with the cold reduction degree of 25% reached the minimum total elongation of 9% in the temperature range of 700 - 800°C. As the degree of cold rolling increases, the strength of the material also increases, which has a negative effect on the total elongation. Thus, a required minimum elongation of 9% can only be achieved with a low degree of cold rolling. These results support that the cold reduction degree should be in the range of 20 - 40 %, more preferably 25 - 35 % for the steel of the invention.

INDUSTRIAL APPLICABABILTY

The steel can used for applications where high strength is combined with good local formability. An example of an application is a seat rail.

**Claims**

**1.** A cold rolled steel strip or sheet having:

a) a composition consisting of the following elements in wt. %:

| | |
|---|---|
| C | 0.02 - 0.10 |
| Si | 0.05 - 0.5 |
| Mn | 0.6 - 1.0 |
| Al | 0.015 - 1.5 |
| Ti | 0.03 - 0.12 |
| Nb | 0.01 - 0.06 |
| Ti+ Nb | 0.05 - 0.15 |

the balance consists of iron and impurities,
wherein the impurities are limited to in wt. %:

| | |
|---|---|
| V | $\leq 0.10$ |
| Cr | $\leq 0.10$ |
| Mo | $\leq 0.05$ |
| W | $\leq 0.05$ |
| Ni | $\leq 0.20$ |
| Cu | $\leq 0.20$ |
| Sn | $\leq 0.015$ |
| Zr | $\leq 0.010$ |
| As | $\leq 0.010$ |
| B | $\leq 0.001$ |
| Ca | $\leq 0.05$ |
| P | $\leq 0.02$ |
| S | $\leq 0.005$ |
| N | $\leq 0.05$ |
| O | $\leq 0.0003$ |
| H | $\leq 0.0020$ |

b) mechanical properties fulfilling the following conditions in accordance with the Industrial Standard DIN EN ISO 6892-1, wherein the samples are taken in the longitudinal direction of the strip:

Yield strength $R_{p0.2}$ 800 - 950 MPa
Tensile strength Rm 830 - 1000 MPa
Total elongation $A_{80} \geq 9\%$

c) a hole expansion ratio $\lambda$ determined by a hole expanding test according to ISO/WD 16630:2009 (E): hole expansion ratio $\lambda \geq 60 \%$
d) a microstructure consisting of in vol%:

| | |
|---|---|
| ferrite | $\geq 95 \%$, and |
| perlite, cementite, carbides, nitrides, and/or carbonitrides | $< 5 \%$ |

e) a bendability Ri/t in accordance with JIS Z2248 that fulfils:

bendability Ri/t     $\leq 1.0$

wherein Ri is the limiting bending radius, which is defined as the minimum bending radius with no occurrence of cracks, and t is sheet thickness, and
f) a carbon equivalent in wt. %:

$$C_{Eq} = C + Mn/6 + (Cu + Ni)/15 + (Cr + Mo + V)/5 \leq 0.45$$

2. The strip or sheet according to any one of the preceding claims, wherein the carbon equivalent is in wt. %:

$$C_{Eq} = C + Mn/6 + (Cu + Ni)/15 + (Cr + Mo + V)/5 \leq 0.28$$

3. A method of manufacturing of a cold rolled steel strip or sheet according to any one of the preceding claims, comprising the following steps:

a) making steel slabs with a composition according to anyone of the preceding claims,
b) reheating the slab to a temperature between 1200 °C and 1300 °C for a time in the range of 10 - 300 minutes,
c) hot rolling the reheated slab completely in the austenitic range wherein the hot rolling finishing temperature is within the range 850 - 950 °C to obtain a hot rolled steel strip,
d) cooling the hot rolled strips to a coiling temperature,
e) coiling the hot rolled strip at a coiling temperature in the range of 470 - 670 °C,
f) optionally subjecting the coiled strip to a scale removal process, such as pickling,
g) cold rolling the steel strip with a reduction degree in the range of 20 - 40 %,
h) final continuous annealing of the cold rolled strip at a temperature in the range of 700 - 800 °C for a time in the range of 25 - 175 s,
i) cooling the final annealed strip at a cooling rate of 2 - 100 °C/s,
j) optionally overaging the final annealed strip at 200 - 500 °C for a duration of 10 - 1000 s.
k) optionally skin pass rolling of the strip at a rolling elongation of 0 - 2 %,
l) optionally coating the strip with a zinc-based coating, and
m) optionally cutting the strip to sheets.

**Patentansprüche**

1. Kaltgewalztes Stahlband oder Stahlblech mit:

a) einer Zusammensetzung, bestehend aus den folgenden Elementen in Gew.-%:

C 0,02 - 0,10
Si 0,05 - 0,5
Mn 0,6 - 1,0
Al 0,015 - 1,5
Ti 0,03 - 0,12
Nb 0,01 - 0,06
Ti + Nb 0,05 - 0,15
der Rest besteht aus Eisen und Verunreinigungen, wobei die Verunreinigungen auf folgende Gew.-% beschränkt sind:

$V \leq 0,10$
$Cr \leq 0,10$
$Mo \leq 0,05$
$W \leq 0,05$
$Ni \leq 0,20$
$Cu \leq 0,20$
$Sn \leq 0,015$
$Zr \leq 0,010$
$As \leq 0,010$
$B \leq 0,001$
$Ca \leq 0,05$
$P \leq 0,02$
$S \leq 0,005$
$N \leq 0,05$

$O \leq 0{,}0003$

$H \leq 0{,}0020$

b) mechanischen Eigenschaften, die die folgenden Bedingungen gemäß der Norm DIN EN ISO 6892-1 erfüllen, wobei die Proben in Längsrichtung des Bandes entnommen werden:

Streckgrenze $R_{p0{,}2}$ 800 - 950 MPa

Zugfestigkeit Rm 830 - 1000 MPa

Gesamtdehnung $A_{80} \geq 9$ %

c) einem Lochaufweitungsverhältnis $\lambda$, das durch einen Lochaufweitungsversuch gemäß ISO/WD 16630:2009 (E) bestimmt wird:

$$\text{Lochaufweitungsverhältnis } \lambda \geq 60\ \%$$

d) einer Mikrostruktur, bestehend aus in Vol.-%:

Ferrit $\geq 95$ % und

Perlit, Zementit, Karbide, Nitride und / oder Carbonitride < 5 %

e) einer Biegbarkeit Ri/t gemäß JIS Z2248, die folgendes erfüllt:

$$\text{Biegbarkeit Ri/t} \leq 1{,}0$$

wobei Ri der Grenzbiegungsradius ist, der als der minimale Biegungsradius ohne Auftreten von Rissen definiert ist, und t die Blechdicke ist, und

f) einem Kohlenstoffäquivalent in Gew.-%:

$$C_{Eq} = C + Mn/6 + (Cu + Ni)/15 + (Cr + Mo + V)/5 \leq 0{,}45$$

**2.** Band oder Blech nach einem der vorstehenden Ansprüche, wobei das Kohlenstoffäquivalent in Gew.-% beträgt:

$$C_{Eq} = C + Mn/6 + (Cu + Ni)/15 + (Cr + Mo + V)/5 \leq 0{,}28$$

**3.** Verfahren zur Herstellung eines kaltgewalzten Stahlbandes oder Stahlblechs nach einem der vorstehenden Ansprüche, umfassend die folgenden Schritte:

a) Herstellen von Stahlbrammen mit einer Zusammensetzung nach einem der vorstehenden Ansprüche,

b) Wiedererwärmen der Bramme auf eine Temperatur zwischen 1200 °C und 1300 °C für eine Zeit in dem Bereich von 10 - 300 Minuten,

c) Warmwalzen der wiedererwärmten Bramme vollständig in dem austenitischen Bereich, wobei die Warmwalz-Endtemperatur in dem Bereich von 850 - 950 °C liegt, um ein warmgewalztes Stahlband zu erhalten,

d) Kühlen der warmgewalzten Bänder auf eine Wickeltemperatur,

e) Wickeln des warmgewalzten Bandes bei einer Wickeltemperatur in dem Bereich von 470 - 670 °C,

f) optionales Unterziehen des gewickelten Bandes einem Zunderentfernungsprozess, wie beispielsweise Beizen,

g) Kaltwalzen des Stahlbandes mit einem Reduktionsgrad in dem Bereich von 20 bis 40 %,

h) abschließendes kontinuierliches Glühen des kaltgewalzten Bandes bei einer Temperatur in dem Bereich von 700 - 800 °C für eine Zeit in dem Bereich von 25 - 175 s,

i) Abkühlen des abschließend geglühten Bandes mit einer Abkühlrate von 2 - 100 °C/s,

j) gegebenenfalls Überalterung des abschließend geglühten Bandes bei 200 - 500 °C für eine Dauer von 10 bis 1000 s,

k) gegebenenfalls Dressierwalzen des Bandes bei einer Walzdehnung von 0 - 2 %,

l) gegebenenfalls Beschichten des Bandes mit einer Beschichtung auf Zinkbasis und

m) gegebenenfalls Schneiden des Bandes zu Blechen.

**Revendications**

**1.** Une bande ou une tôle d'acier laminée à froid, ayant,

a) une composition constituée des éléments suivants, en % en poids :

| | |
|---|---|
| C | 0,02 - 0,10 |
| Si | 0,05 - 0,5 |
| Mn | 0,6 - 1,0 |
| Al | 0,015 - 1,5 |
| Ti | 0,03 - 0,12 |
| Nb | 0,01 - 0,06 |
| Ti + Nb | 0,05 - 0,15 |

le reste consistant en du fer et des impuretés,
les impuretés étant, en % en poids, limitées à

| | |
|---|---|
| V | $\leq 0,10$ |
| Cr | $\leq 0,10$ |
| Mo | $\leq 0,05$ |
| W | $\leq 0,05$ |
| Ni | $\leq 0,20$ |
| Cu | $\leq 0,20$ |
| Sn | $\leq 0,015$ |
| Zr | $\leq 0,010$ |
| As | $\leq 0,010$ |
| B | $\leq 0,001$ |
| Ca | $\leq 0,05$ |
| P | $\leq 0,02$ |
| S | $\leq 0,005$ |
| N | $\leq 0,05$ |
| O | $\leq 0,0003$ |
| H | $\leq 0,0020$ |

b) des propriétés mécaniques satisfaisant aux conditions suivantes conformément à la norme industrielle DIN EN ISO 6892-1, les échantillons étant prélevés dans le sens longitudinal de la bande :

| | | |
|---|---|---|
| Limite d'élasticité | $R_{p0,2}$ | 800 - 950 MPa |
| Résistance à la traction | Rm | 830 - 1000 MPa |
| Allongement total | $A_{80}$ | $\geq 9\ \%$ |

c) un rapport d'expansion des trous $\lambda$ déterminée par un essai d'expansion de trou conformément à : ISO/WD 16630:2009 (E) :

| | | |
|---|---|---|
| rapport d'expansion des trous | $\lambda$ | $\geq 60\ \%$ |

d) une microstructure composée de, en % en volume :

| ferrite | ≥ 95 %, et |
| perlite, cémentite, carbures, | |
| nitrures et/ou carbonitrures | < 5 % |

e) une aptitude à la flexion Ri/t conforme à la norme JIS Z2248 qui satisfait à :

| aptitude à la flexion Ri/t | ≤ 1,0 |

où Ri est le rayon de flexion limite, défini comme étant le rayon de flexion minimal sans apparition de fissures, et t est l'épaisseur de la tôle, et
f) un équivalent carbone, en % en poids :

$$C_{Eq} = C + Mn/6 + (Cu + Ni)/15 + (Cr + Mo + V)/5 \leq 0{,}45$$

2. La bande ou tôle selon l'une quelconque des revendications précédentes, dans laquelle l'équivalent carbone est, en % en poids :

$$C_{Eq} = C + Mn/6 + (Cu + Ni)/15 + (Cr + Mo + V)/5 \leq 0{,}28$$

3. Un procédé de fabrication d'une bande ou d'une tôle d'acier laminée à froid selon l'une quelconque des revendications précédentes, comprenant les étapes suivantes :

a) fabrication de brames d'acier ayant une composition selon l'une quelconque des revendications précédentes,
b) réchauffage de la brame à une température comprise entre 1200 °C et 1300 °C pendant une durée comprise entre 10 et 300 minutes,
c) laminer à chaud la brame réchauffée entièrement dans la gamme austénitique, la température de finition du laminage à chaud étant comprise entre 850 et 950 °C, afin d'obtenir une bande d'acier laminée à chaud,
d) refroidir les bandes laminées à chaud à une température d'enroulement,
e) enrouler la bande laminée à chaud à une température d'enroulement comprise entre 470 et 670 °C,
f) optionnellement, soumettre la bande enroulée à un processus d'élimination des scories, tel que le décapage,
g) laminer à froid la bande d'acier avec un degré de réduction compris entre 20 et 40 %,
h) effectuer un recuit continu final de la bande laminée à froid à une température comprise entre 700 à 800 °C pendant une durée comprise entre 25 et 175 s,
i) refroidir la bande recuite finale à une vitesse de refroidissement allant de 2 à 100 °C/s,
j) optionnellement sur-vieillir la bande recuite finale à une température comprise entre 200 et 500 °C pendant une durée comprise entre 10 et 1000 s,
k) optionnellement, laminer la bande par laminage de finition à un allongement de laminage de 0 à 2 %,
l) optionnellement, recouvrir la bande d'un revêtement à base de zinc, et
m) optionnellement, découper la bande en feuilles.

Fig.1

Fig. 2

## Fig. 3

## Fig. 4

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 20221845780 A1
- CN 112680655 A
- EP 1399598 B2
- CN 109207842 A